# EUROPÄISCHE PATENTSCHRIFT

(11) **EP 4 342 295 B1**
(45) Veröffentlichungstag und Bekanntmachung des Hinweises auf die Patenterteilung: **24.09.2025**
(21) Anmeldenummer: 23020446.3
(22) Anmeldetag: 25.09.2023
(51) Int. Cl.: A01K 47/06, A01K 51/00

(54) **VORRICHTUNG UND VERFAHREN ZUR AUTOMATISIERTEN GEMÜLL-ANALYSE IN BIENENBEUTEN**
APPARATUS AND METHOD FOR AUTOMATED GEMLE ANALYSIS IN BEEHIVES
DISPOSITIF ET PROCÉDÉ D'ANALYSE AUTOMATISÉE DE DÉCHETS DANS DES RUCHES

(30) Priorität: 26.09.2022 DE 102022124691
(43) Veröffentlichungstag der Anmeldung: 27.03.2024
(73) Patentinhaber: ZooPal UG (haftungsbeschränkt), 04105 Leipzig (DE)
(72) Erfinder: Mattheß, Maximilian, 04315 Leipzig (DE); Bigl, Gunther, 04105 Leipzig (DE)
(74) Vertreter: Völger, Karl Wolfgang

(56) Entgegenhaltungen:
- CN-U- 216 601 275
- US-A1- 2017 064 931

## Beschreibung

Die Erfindung betrifft eine Vorrichtung und ein Verfahren zur automatisierten Gemüll-Analyse in Bienenbeuten, mit welchen eine Erfassung des Befallgrades von Varroatose in Beuten von Honigbienen sowie deren Behandlung ermöglicht wird.

Die Westliche Honigbiene (Apis mellifera) wird als drittwichtigstes Nutztier auf der ganzen Welt gehalten und ist für die Bestäubung von fast 80 % aller Nutz- und Wildpflanzen verantwortlich. Seit den 2000er Jahren kommt es jedoch immer häufiger zum sog. "Bienensterben", durch welches Imker in kurzer Zeit ganze Völker verlieren können. Die Ursachen dieses Bienensterbens sind vielfältig, jedoch spielt die aus Ostasien stammende Varroamilbe (Varroa destructor) eine wesentliche Rolle, da sie die Varroatose überträgt, welche ein Bienenvolk erheblich schädigen und über den Winter zu dessen Tod führen kann.

Die Varroamilbe ist damit der wirtschaftlich bedeutendste Bienenschädling. Trotzdem existieren bis dato keine automatischen Diagnosevorrichtungen, die den Befall der Bienenvölker zuverlässig und live überwachen. Bisher ist stets eine manuelle Kontrolle des Befallgrades durch den Imker erforderlich, was einen hohen manuellen Aufwand bedeutet. Obwohl die Ergebnisse auch für den staatlichen Tierseuchenschutz interessant sind, gibt es bislang kein flächendeckendes Monitoring des Befalls mit Varroamilben gibt.

Aus dem Stand der Technik sind Vorrichtungen zur Bekämpfung der Varroamilbe grundsätzlich bekannt. So beschreibt DE 20 2017 000 059 U1 eine Vorrichtung zur Bekämpfung der Varroamilbe im Bienenstock, die eine Aufhängevorrichtung umfasst, die in einer Zarge des Bienenstocks positionierbar ist, mit einer flächigen Inneneinheit, die an der Aufhängevorrichtung befestigt ist. Diese Vorrichtung soll sich dadurch auszeichnen, dass die Inneneinheit zumindest bereichsweise eine wabenähnliche Struktur aufweist, wobei die wabenähnliche Struktur zumindest bereichsweise mit einem Klebemittel versehen ist, das der Aufnahme der Varroamilben dient. Ferner ist aus DE 20 2020 005 651 U1 eine Vorrichtung zur Behandlung von mit bienenschädlichen Milben befallenen Bienen mittels UV-Licht bekannt, welche zumindest eine Strahlungsquelle zu Aussenden von UV-Licht umfasst, welche die Varroamilben abtöten soll. CN 216 601 275 U offenbart eine intelligente automatische Reinigungsvorrichtung für Bienenstöcke. Ein Förderband ist vorgesehen, um tote Bienen und Bienen-Exkremente aufzufangen. Unterhalb des Förderbands ist ein Drucksensor angebracht, der bei einem bestimmten auf dem Förderband liegenden Gewicht den Fördermechanismus in Gang setzt, um die auf dem Förderband aufgefangenen toten Bienen und Bienen-Exkremente Förderband nach draußen zu befördern. Zusätzlich sind Abstreifer und weitere mechanische Mittel vorgesehen, um das Förderband zu reinigen.

Nach dem Stand der Technik ist die Zählung der Varroamilben zur Erfassung des Befallgrades eine zeitintensive Tätigkeit, die zunächst eine geeignete Belichtung erfordert, um die im Gemüll befindlichen Varroamilben zählen zu können. Der Imker (bzw. eine entsprechende Person) muss grundsätzlich jede seiner Beuten einzeln auswerten und notieren, wie hoch der Befallgrad ist. Hierzu wurden einige einfache Systeme entworfen, die dem Imker bei dieser Tätigkeit (Zählung) behilflich sein können. Diese Systeme beruhen in der Regel auf der Nutzung der Kamera eines Mobiltelefons, das zudem über eine entsprechende Software (App; Applikation) verfügt, die das Zählen der Varroamilben für den Imker übernimmt.

Die bekannten Verfahren und Vorrichtungen weisen grundsätzlich den Nachteil auf, dass keines völlig autark arbeitet, so dass immer der Imker benötigt wird, um (mit technischer Unterstützung) manuell die Zählung anzustoßen und auszuwerten.

Trotz des sich stetig entwickelnden Standes der Technik mangelt es daher an Daten, die es erlauben, das Phänomen des "Bienensterbens" besser zu verstehen, beispielsweise wo die Ausbreitung am höchsten ist oder welche Methoden zu Bekämpfung sind am effektivsten sind.

Es besteht daher der große Bedarf an sinnvollen Lösungen, die es Imkern erlauben, ihre Zählungen von Varroamilben effektiv und effizient durchzuführen und die Ergebnisse einer breiten Anzahl von Forschern weltweit zugänglich zu machen.

Der vorliegenden Erfindung liegt daher die Aufgabe zugrunde, eine Vorrichtung zur automatisierten Gemüll-Analyse in Bienenbeuten bereitzustellen und ein entsprechendes Verfahren anzugeben, die nicht-invasiv erfolgen, so dass das Bienenvolk nicht beeinträchtigt oder gestört wird.

Diese Aufgabe wird in einem ersten Aspekt der vorliegenden Erfindung durch eine Vorrichtung gemäß Anspruch 1 zur automatisierten Gemüll-Analyse in Bienenbeuten gelöst, umfassend
- einen Rahmen (1) zum Unterbauen eines Wabenkastens (W), wobei der Rahmen (1) dazu ausgelegt ist, das aus einem Bienenbeutensystem herausfallende Gemüll (G) aufzufangen,
- einen im Rahmen (1) angeordneten Transportmechanismus (3), der dazu ausgelegt ist, das aufgefangene Gemüll (G) der Bienenbeute aufzunehmen und in einen Analysebereich zu transportieren,
- einen außerhalb des Rahmens (1) für den Transportmechanismus (3) angeordneten Analysebereich (5),
- eine über dem Analysebereich (5) vorgesehenen Erfassungseinheit (7) und
- eine elektronische Auswerteeinheit (9) zur Aufnahme, Aufbereitung und Auswertung der von der Erfassungseinheit (7) aufgenommenen Daten.

Als "Gemüll" wird nach allgemeiner Definition bezeichnet, was sich unterhalb der Bienenbeute ansammelt, also was sich von den Waben löst, beispielsweise Parasiten wie die Varroamilbe, Pollenreste, Wachsreste, abgestorbene Bienen und dergleichen. Mit "Bienenbeute" wird die reine Behausung bezeichnet, also ein Behältnis, in das beispielsweise Holzrahmen gehängt werden, in welchen die Bienen ihre Waben bauen. Der "Wabenkasten" stellt erfindungsgemäß jenen Teil der Bienenbeute dar, in welchem die Waben hängen. Der Wabenkasten (W) ist ein mehr oder weniger einheitliches Bauteil, das in verschiedenen Abmessungen vorkommt.

Der erfindungsgemäße "Rahmen" wird unter der den Wabenkasten (W) gesetzt (bzw. wird der Wabenkasten (W) auf den Rahmen (1) gesetzt) und kann entweder eine zum Wabenkasten (W) passende Größe aufweisen oder über passende Adapter mit diesem abschließen. Da Bienenbeuten (mit den Wabenkästen (W)) nur eine überschaubare Anzahl an gängigen Größen haben, hält sich die notwendige Zahl an Adaptern in Grenzen.

Der "Transportmechanismus" ist erfindungsgemäß zunächst nur ein Element, welches das Gemüll (G) aufnimmt und in einen Analysebereich transportiert. Dabei ist bevorzugt, dass der Transportmechanismus (3) die gesamte Fläche unterhalb der Wabenkastens (W) einnimmt, damit das Gemüll quantitativ aufgenommen werden kann. Verschiedene Bauarten von Transportmechanismen (3) werden im Rahmen der vorliegenden Erfindung noch definiert.

Der "Analysebereich" ist vorzugsweise außerhalb der Bienenbeute angeordnet, vor allem um eine gute Zugänglichkeit für die Zählung durch die Erfassungseinheit (7) zu erreichen. Das bereits ausgewertete Gemüll (G) wird in einem Sammelbehälter zur Entsorgung oder Nachzählung gesammelt. Außerdem ist eine Reinigungsvorrichtung für das Transportsystem integriert.

Sofern unterhalb der Bienenbeute ausreichend Platz ist, kann sich der Analysebereich 5 mit der Erfassungseinheit 7 auch direkt an oder über der erfindungsgemäßen Vorrichtung befinden.

Die "elektronische Auswerteeinheit" ist im Sinn der vorliegenden Erfindung eine Vorrichtung zur Erfassung von einzelnen Milben im Gemüll (G) mit Hilfe optischer, chromatografischer, akustischer, elektrostatischer oder anderer elektronischer Sensorik.

Die Formulierung "außerhalb des Rahmens (1) für den Transportmechanismus (3)" kann sowohl bedeuten, dass der Analysebereich (5) seitlich vor dem Rahmen (1) angeordnet ist, als auch dass der Analysebereich (5) sich oberhalb des Rahmens (1) befindet. Für letzteren Fall sind Vorkehrungen zum Abweisen des Gemülls (G) auf den Transportmechanismus (3) zu treffen, die nachstehend noch beschrieben werden.

Die erfindungsgemäße Vorrichtung weist zunächst den Vorteil auf, dass damit die technischen Voraussetzungen für eine automatisierte Gemüll-Analyse in Bienenbeuten geschaffen werden. Durch die Platzierung unterhalb des Wabenkastens (W) bzw. der Bienenbeuten wird das Bienenvolk nicht gestört, die Vorrichtung kann nicht-invasiv betrieben werden. Zudem ermöglicht es der Transportmechanismus (3), das Gemüll quantitativ und kontinuierlich aufzunehmen, so dass eine höchst genaue Erfassung möglich ist, ohne dass es zu einer punktuellen Anhäufung von Gemüll (G) kommt und die Milben durch andere Müllbestandteile verdeckt werden.

Da die Varroatose EU-weit als "meldepflichtige Bienenseuche" geführt wird, ist es für jeden Imker besonders wichtig, ohne großen Zeitaufwand den Befallsgrad seiner Völker zu dokumentieren Durch die vorliegende Erfindung werden alle Befallszahlen und Statistiken gespeichert und vorgehalten, auch ein Behandlungserfolg kann so dokumentiert werden.

In einer bevorzugten Ausführungsform weist die erfindungsgemäße Vorrichtung eine Reinigungseinrichtung für den Transportmechanismus (3) auf, damit dieser vor dem erneuten Einbringen in den Rahmen (1) unterhalb der Bienenbeute frei von Milben-Material ist, das die nachfolgende Erfassung verfälschen würde. Diese Reinigung kann mit Hilfe einer Bürste, eines Gebläses, eines Reinigungsschwammes oder anderer mechanischer und elektrostatischer Vorrichtungen erfolgen (elektrisches Feld, Ultraschall).

Es hat sich zudem als vorteilhaft erwiesen, wenn die erfindungsgemäße Vorrichtung einen Sammelbehälter aufweist, in welchem das bereits analysierte Gemüll (G) aufgenommen wird. Insbesondere steht dieser Sammelbehälter in mechanischer und funktioneller Verbindung mit der Reinigungseinrichtung.

In einer Weiterbildung der erfindungsgemäßen Vorrichtung weist der Transportmechanismus (3) ein Förderband (301) auf, das den Bodenbereich des Rahmens (1) vollständig abdeckt und an einer Seite desselben um ein Maß (M) aus diesem herausreicht, so dass der Analysebereich (5) gebildet wird.

Mit dieser speziellen Weiterbildung ist es möglich, das Gemüll (G) kontinuierlich oder diskontinuierlich aus der Bienenbeute zu entfernen. Im kontinuierlichen Modus kann der Befallgrad in zeitlicher Abhängigkeit ermittelt werden, während der diskontinuierliche Modus eine quantitative Erfassung in vorgebbaren Zeitintervallen ermöglicht. Der Benutzer kann über die Online Steuerung selbständige Erfassungszeiträume und Erfassungshäufigkeiten remote per Internet anpassen.

Durch die Weiterbildung mit einem Förderband (301) kann der Transportmechanismus auch (3) direkt gereinigt werden, wenn der Analysebereich (5) freigegeben wurde.

Eine Ausführungsform sieht vor, dass die Erfassungseinheit (7) einen optischen Scanner umfasst, der zur Erfassung des Gemülls (G) ausgelegt ist. Dadurch erreicht man eine sehr geringe Datenrate, da der Erfassungsbereich in der Vorrichtung selbst optimiert (Entfernung redundanter Daten) und nur wirklich benötigte Daten zur Auswertung gesendet werden.

In einer weiteren Ausführungsform kann die Datenverarbeitung auch vor Ort erfolgen, und nur die Ergebnisse werden dann an den Steuerserver übergeben, das kann vor allem für größere Imkereien einen Kostenvorteil darstellen

Alternativ zur optischen Erfassung kann das Gemüll (G) auch auf andere Weise erfasst werden, beispielsweise chemisch, elektrostatisch oder per Ultraschall.

Die elektronische Auswerteeinheit (9) weist bevorzugt ein Steuermodul für den Transportmechanismus (3), ein Speichermodul für die erfassten Daten und eine Kommunikationsschnittstelle zu externen Endgeräten auf. Dadurch ist es möglich, den Datenversand an den zentralen Server z.B. auch über eine Smartphone-App im heimischen WLAN durchzuführen. Weiterhin muss nur eine zentrale Datenverbindung vor Ort für alle Erfassungseinheiten zur Verfügung gestellt werden.

Es hat sich für die Effizienz der erfindungsgemäßen Vorrichtung als vorteilhaft erwiesen, wenn die elektronische Auswerteeinheit (9) auf Künstlicher Intelligenz (KI) beruht. Hierbei werden unabhängig von der Sehkraft des Benutzers konstante Auswertungsergebnisse erzielt.

Da es mit der erfindungsmäßen Vorrichtung möglich ist, den Befallgrad eines Bienenvolkes mit Varroamilben zu detektieren, umfasst diese in einer anderen Weiterbildung ferner eine sensorgesteuerte Behandlungseinheit (11) zur Behandlung des in dem Wabenkasten (W) beheimateten Bienenvolkes. Der Behandlungszyklus wird vom Benutzer manuell gestartet und läuft dann vollautomatisch ab, der medizinisch wirksame Säuregehalt im Inneren der Bienenbeute wird automatisch gesteuert und die Ausbringung des Bienen-Medikaments nach der gewünschten Konzentration geregelt. Der Behandlungserfolg wird anhand der im Gemüll (G) im Zeitverlauf gefundenen Milben überwacht und die Behandlung automatisch beendet, wenn nach einem bestimmten Zeitintervall keine neuen Milben mehr nachgewiesen werden.

Die erfindungsgemäße Behandlungseinheit (11) weist auf
- ein Gehäuse mit mindestens einer Auslassöffnung (1103),
- einen in dem Gehäuse angeordneten Verdampferraum mit einer beheizten und fliesbelegten Verdampferfläche,
- eine Aufgabeeinheit für ein flüssiges Behandlungsmittel auf die beheizte und fliesbelegte Verdampferfläche, welche in fluiddynamischer Verbindung mit einem Tank (1101) steht,
- eine Gebläse Einheit zum Führen von Luft über die beheizte und fliesbelegte Verdampferfläche hin zur Auslassöffnung (1103),
- zumindest ein im Brutraum innerhalb des Wabenkastens (W) angeordneter Sensor, der mit der Elektronik der Behandlungseinheit (11) verbunden ist.

Die Aufgabeeinheit kann vorteilhaftweise eine Mikrodosierpumpe zum Fördern des flüssigen Behandlungsmittels aus dem Tank (1101) sein.

Die vorstehend genannte Aufgabe wird in einem zweiten Aspekt der vorliegenden Erfindung durch ein Verfahren gemäß Anspruch 8 gelöst.

Das erfindungsgemäße Verfahren weist grundsätzlich die gleichen Vorteile wie die Vorrichtung auf, nämlich, dass eine automatisierte Gemüll-Analyse in Bienenbeuten ermöglicht wird. Das Verfahren ist nicht-invasiv, so dass das Bienenvolk nicht gestört wird. Das Verfahren kann kontinuierlich oder diskontinuierlich durchgeführt werden und erlaubt eine quantitative Aufnahme des Gemülls (G), wodurch eine höchst genaue Erfassung gegeben ist.

Eine Weiterbildung des erfindungsgemäßen Verfahrens sieht vor, dass das Erfassen in Schritt c) mittels bildgebender Einheiten erfolgt Das ermöglicht eine ressourcenschonende, langlebige und preislich massentaugliche Produktion und damit einen flächendeckenden Einsatz.

Es hat sich für die Effizient des erfindungsgemäßen Verfahrens als vorteilhaft erwiesen, wenn das Auswerten in Schritt d) mittels Künstlicher Intelligenz (KI) erfolgt und ein qualitatives und quantitatives Ergebnis eines möglichen Befalls des in dem Wabenkasten (W) beheimateten Bienenvolkes an den Empfänger ausgegeben wird. Hierdurch wird nicht nur eine Aussage über den Befall als solchen, sondern auch über den Befallgrad und daraus resultierend zu möglichen Behandlungsweisen ermöglicht.

Durch die vorstehenden Verfahrensmerkmale ist es in vorteilhafter Weise möglich, dass das Verfahren ferner die Schritte umfasst
e) Behandeln des in dem Wabenkasten (W) beheimateten Bienenvolkes gemäß dem ermittelten Befall,
   wobei das Behandeln manuell gestartet und anschließend von einer sensorgesteuerten Behandlungseinheit (11) automatisch durchgeführt wird,
f) Analysieren des Befallgrades in vorgebbaren Zeitintervallen und Korrelieren mit der Behandlungsdauer,
wobei auf der Grundlage des Ergebnisses des Korrelierens die Behandlung angepasst wird.

Das erfindungsgemäße Verfahren ermöglicht nicht nur die Erfassung eines Befalls und eines Befallgrades, sondern kann gleichzeitig auch die Behandlung des Befalls in Schritt e) umfassen.

Wenn das betroffene Bienenvolk mit dem erfindungsgemäßen Verfahren behandelt wird, hat es sich als vorteilhaft erwiesen, wenn in vorgebbaren Zeitintervallen der Befallgrad analysiert wird, um so gewissermaßen den Erfolg der Behandlung zu ermitteln und ausgehend davon die Behandlung nach Schritt e) anzupassen.

Weitere Ziele, Merkmale, Vorteile und Anwendungsmöglichkeiten ergeben sich aus der nachfolgenden Beschreibung von die Erfindung nicht einschränkenden Ausführungsbeispielen, auch anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1: eine schematische Darstellung einer erfindungsgemäßen Vorrichtung gemäß einer ersten Ausführungsform mit aufgesetztem Wabenkasten W,
- Fig. 2: eine schematische Darstellung einer erfindungsgemäßen Vorrichtung gemäß einer ersten Ausführungsform,
- Fig. 3: eine schematische Detaildarstellung A aus Fig. 2,
- Fig. 4: eine schematische Darstellung der erfindungsgemäßen Vorrichtung aus Fig. 2 mit entfernten Elementen,
- Fig. 5: eine schematische Draufsicht auf die erfindungsgemäße Vorrichtung aus Fig. 2,
- Fig. 6: eine schematische Detaildarstellung B aus Fig. 5 und
- Fig. 7: eine schematische Querschnittsansicht C-C aus Fig. 5.

In den Figuren werden alle gleichen Bauteile mit den gleichen Bezugszeichen benannt, aus Gründen der Übersichtlichkeit sind aber nicht unbedingt in allen Darstellungen alle Bezugszeichen eingefügt.

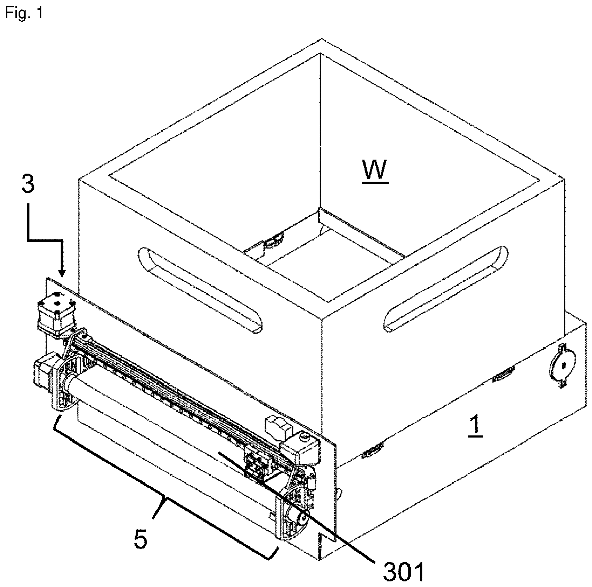

Figur 1 zeigt eine bevorzugte Ausführungsform der erfindungsgemäßen Vorrichtung zur automatisierten Gemüll-Analyse in Bienenbeuten, welche unter einen herkömmlichen Wabenkasten W gesetzt ist. Die Darstellung zeigt, wie der Rahmen 1 mit dem Transportmechanismus 3 unter dem Wabenkasten W hervorspringt und damit die automatisierte Gemüll-Analyse in dem Analysebereich 5 problemlos ermöglicht. Dabei ist der Transportmechanismus 3 nur schematisch angedeutet, in den weiteren Figuren sind Details dargestellt.

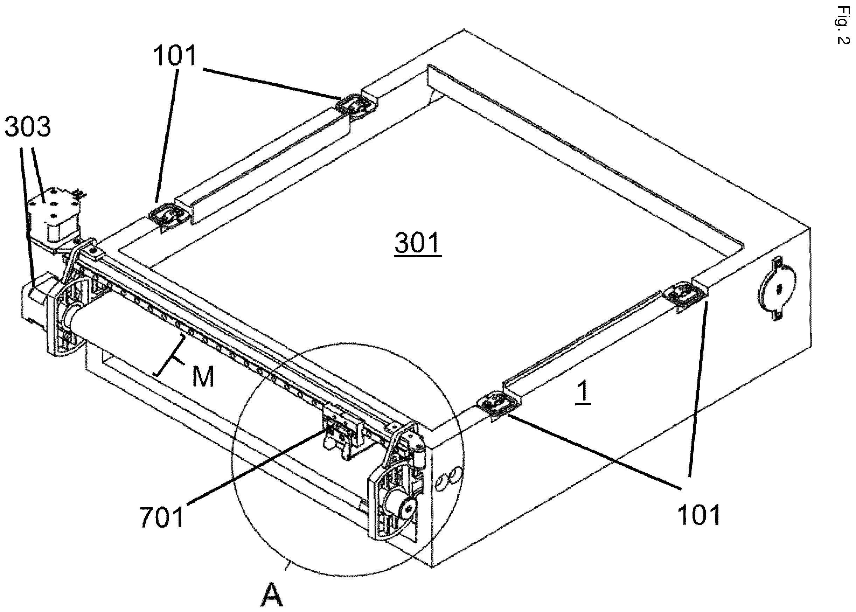

In Figur 2 ist der Wabenkasten W entfernt und gibt den Blick auf den vollständigen Rahmen 1 frei, in dem ein Förderband 301 als Teil des Transportmechanismus 3 angeordnet ist. Zu diesem gehören ebenfalls die Schrittmotoren 303 zum Verfahren und Bewegen des Förderbands 301. Die Erfassungseinheit 7 ist hier ebenfalls nur schematisch angedeutet, indem ein Kameraschlitten 701 dargestellt ist, der über die gesamte Breite des Analysebereichs 5 verfahrbar ist. Der Rahmen 1 enthält in seinen Seiten, auf welche Wabenkasten W aufgesetzt wird, Lastzellen 101. Diese Lastzellen 101 dienen u.a. zur Erfassung von Gewichtsänderungen.

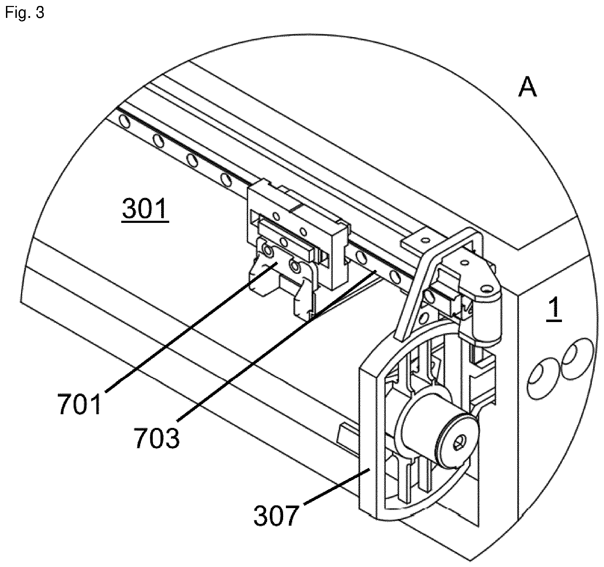

Figur 3 stellt die Detailansicht A, wie sie in Figur 2 durch den Kreis definiert ist, schematisch dar. Zur besseren Orientierung ist das Förderband 301 angegeben. Über dessen Kante ist der Kameraschlitten 701 entlang der Führungsschiene verfahrbar. Ebenfalls im Detail dargestellt ist eine der Lagereinheiten 307 für das Förderband 301.

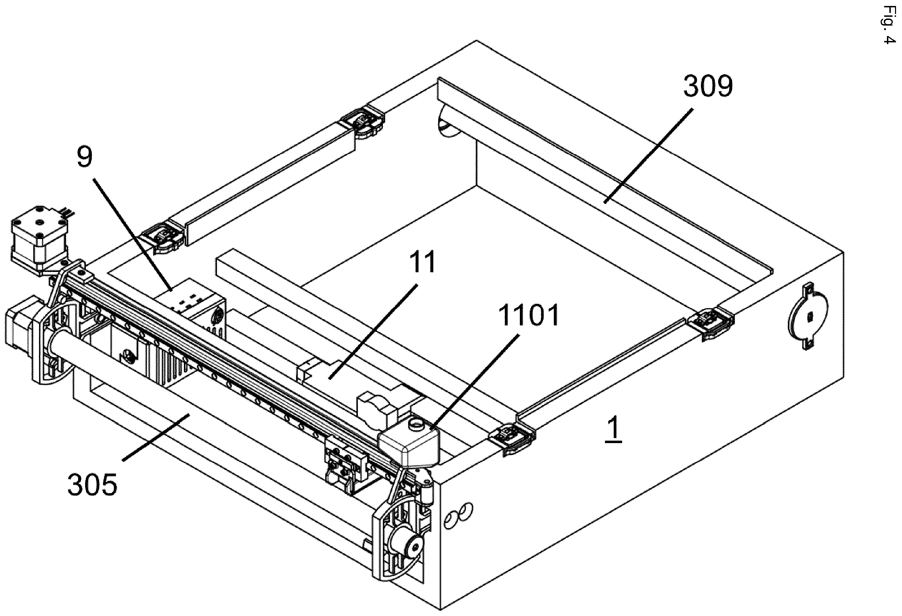

In Figur 4 ist gegenüber der Figur 2 das Förderband 301 entfernt, um einen Blick ins Innere des Rahmens 1 zu ermöglichen. Im vorderen Bereich ist die in den Lagereinheiten 307 gelagerte Umlenkrolle 305 angeordnet. Auf der gegenüberliegenden Seite des Rahmens 1 ist der Förderbandspanner 309 vorgesehen. Im Inneren des Rahmens 1 ist darüber hinaus die Auswerteeinheit (Elektronik) 9 zu erkennen. In dieser Darstellung ist darüber hinaus die sensorgesteuerte Behandlungseinheit 11 dargestellt, welche mit dem Tank 1101 in Verbindung steht, welcher ein flüssiges Behandlungsmittel aufnimmt. Das flüssige Behandlungsmittel ist bevorzugt eine organische Säure wie Ameisensäure.

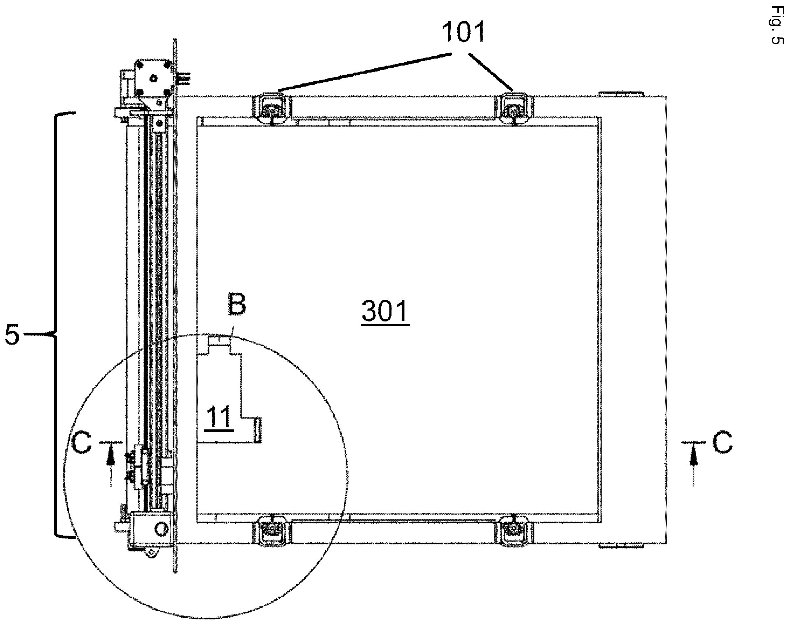

Figur 5 gibt eine Draufsicht auf die erfindungsgemäße Vorrichtung aus Figur 2, aus der noch einmal die Anordnung der sensorgesteuerten Behandlungseinheit 11 in Bezug auf die weiteren Elemente ersichtlich ist. In Figur 5 ist eine weitere Detailansicht B sowie eine Markierung für eine Querschnittsansicht C-C eingezeichnet.

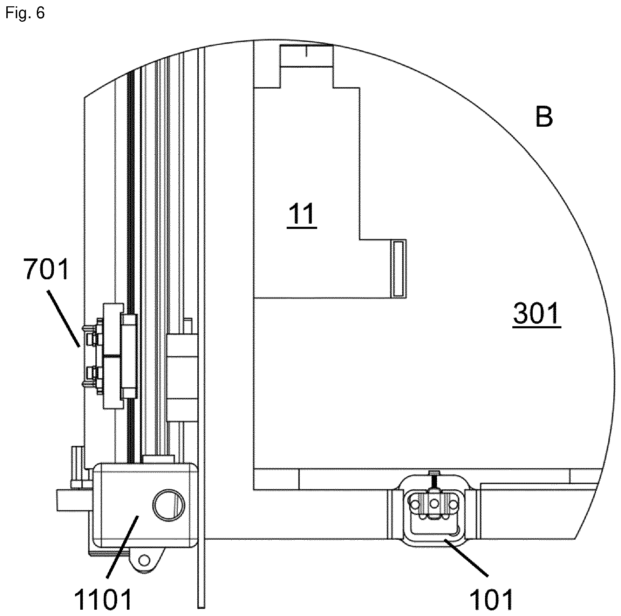

Figur 6 stellt die Detailansicht b, wie sie in Figur 5 durch den Kreis definiert ist, schematisch dar. Aus dieser Darstellung werden die Anordnung von sensorgesteuerter Behandlungseinheit 11 und Tank 1101 zueinander deutlich.

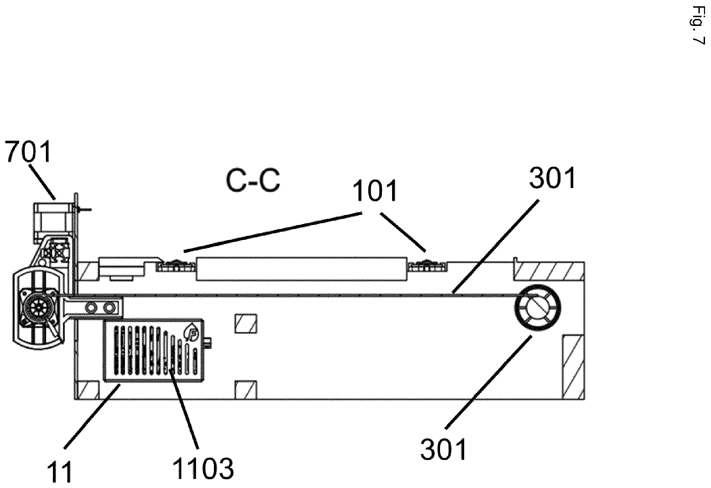

In Figur 7 wird der Schnitt entlang der Markierung C-C, wie er in Figur 5 markiert ist, dargestellt. Hier wird ersichtlich, dass die sensorgesteuerte Behandlungseinheit 11 unterhalb des Förderbandes 301 angeordnet ist, während der Tank 1101 der besseren Zugänglichkeit wegen oberhalb des Analysebereichs 5 randseitig vorgesehen ist. Zudem liegt die Auslassöffnung 1103 offen, über welche das flüssiges Behandlungsmittel ausgebracht wird.

Nachstehend wird eine spezielle Ausführungsform der Erfindung beschrieben, welche jedoch nicht als beschränkend auszulegen ist.

Gemäß der vorliegenden Erfindung erfolgt die Analyse des Befallgrades grundsätzlich durch das Auszählen von toten "gefallenen" Varroamilben in der sog. Varroaschublade oder "Windel" der Bienenbeute, die sich unterhalb des Brutraumes (des Wabenkastens (W)) des Bienenvolkes befindet. Dieses Auszählen ist bekannt und wird immer noch weitgehend manuell, ggf. mit Unterstützung einer Kamera durchgeführt.

Bienen putzen sich und den Stock regelmäßig und entfernen sich somit die Parasiten vom Körper oder aus den Brutwaben. Diese Parasiten fallen zusammen mit Pollenresten, Wachsresten oder auch abgestorbenen Bienen als Gemüll G nach unten und sammeln sich in der Varroaschublade.

Die klassische Varroaschublade wird in der vorliegenden Erfindung durch die Vorrichtung aus Rahmen 1, Transportmechanismus 3 und Analysebereich 5 ersetzt, wozu noch die Erfassungseinheit 7 und die elektronische Auswerteeinheit 9 kommen.

Die Mechanik der erfindungsgemäßen Vorrichtung wurde als Prototyp entwickelt und getestet. Es handelt sich um ein fernsteuerbares Förderband 301, welches einen vibrationsarmen Transport des Gemülls G in den Analysebereich 5 und eine stündliche bis tägliche Kontrolle sicherstellt. Weiterhin fungiert das Förderband 301 außerhalb der Varroakontrollzeitraums auch als steuerbares Lüftungsgitter / Wärmebrett zur Verbesserung des Klimas in der Bienenbeute. Das erfasste Gemüll G wird in einen Gemüllkasten aufgefangen und steht zu einer weiteren Analyse oder zur Entsorgung zur Verfügung. Die Anbindung an das "Internet of Things" geschieht über einen Accesspoint, der alle an einem Standort vorhandenen erfindungsgemäßen Vorrichtungen mit dem Auswertungsserver (elektronische Auswerteeinheit 9) verbindet.

Die vorliegende Erfindung ist insbesondere als System modular gestaltet, um sowohl ausbaufähig (neue Funktionen und Sensoren) als auch kosteneffizient zu sein.

Die Behandlungseinheit 11, die in den Figuren nur schematisch dargestellt ist, überwacht die Konzentrationen der eingesetzten Reagenzien, insbesondere die Säurekonzentration (z.B. Ameisensäure), und bietet somit eine Sicherheit vor behandlungsbedingten Schäden am Bienenvolk. Die Konzentrationen, insbesondere die Säurekonzentration, und der damit korrelierende Behandlungserfolg werden live an den Server übermittelt und können vom Benutzer eingesehen und gesteuert werden.

In der Behandlungseinheit 11, die mit dem Tank 1011 für das flüssige Behandlungsmittel (z.B. Ameisensäure) verbunden ist, ist eine beheizte und fliesbelegte Verdampferfläche vorgesehen, auf welche mittels einer Aufgabeeinheit das flüssige Behandlungsmittel aufgegeben wird. In einer konkreten Ausführungsform wird dieses flüssige Behandlungsmittel mittels einer Mikrodosierpumpe aus dem Tank 1011 gefördert. Eine Gebläseeinheit bläst dann Luft über die befeuchtete Verdampferfläche, wodurch das verdampfte flüssige Behandlungsmittel aus der Auslassöffnung 1103 heraus in den Brutraum geblasen wird, der sich innerhalb des Wabenkastens W befindet. Im Brutraum selbst ist ein mit der Elektronik der Behandlungseinheit 11 verbundener Sensor verbaut, der die Aufgabe des flüssigen Behandlungsmittels steuert.

Die Auswertungssoftware und der Auswertungsserver (vorzugsweise in einer "Cloud") sind zunächst auf die Varroamilbe angelernt. Die Elektronikeinheit in der Baute ist als Prototyp verfügbar und befindet sich im Testlauf.

Die Berechnung des Befalls geschieht auf Servern, an denen sich Benutzer anmelden und ihre Bienenbeuten registrieren können. In einem Benutzerbereich können die einzelnen registrierten Systeme konfiguriert werden (z.B. Häufigkeit der Erfassungen etc.). Im Benutzerbereich können zudem die Statistiken des Befalls angerufen werden.

Mit einer speziellen Software (z.B. einer mobilen App) können ferner Befallswarnungen und dergleichen ausgegeben werden. Die Technik der Erfassungseinheit 7 ist so ausgelegt, die erfindungsgemäße Vorrichtung modular zu erweitern und weitere Funktionalitäten wie z.B. eine Warnung vor "Räuberei" (Überfall eines anderen Bienenvolkes mit dem hohen Risiko einer Reinfektion mit Varroamilben und anderen Erregern) einzubauen. Weiterhin ist ein Modul zur Temperaturüberwachung, zur Gewichtsüberwachung des Gesamtsystems und eine Einflug-Ausflug-Überwachungseinheit geplant.

Gleichfalls besteht die Möglichkeit, aus der Gemüll-Analyse neben der Varroatose auch andere Bienenkrankheiten zu diagnostizieren. Hierfür können entsprechende Änderungen an der Analyse-Software erfolgen.

Nachfolgend werden spezielle Anwendungsbeispiele aufgeführt, welche jedoch den Schutzbereich der Patentansprüche nicht einschränken.

### Anwendungsbeispiel 1

In diesem Anwendungsbeispiel wird die erfindungsgemäße Vorrichtung einschließlich der Erfassungseinheit 7 als gesamte Einheit unterhalb der Bienenbeute montiert bzw. aufgestellt. Die Erfassung des Gemülls G erfolgt somit unter der Bienenbeute mit Hilfe einer starren oder beweglichen Kamera als Erfassungseinheit 7.

Um zu verhindern, dass Gemüll G auf der Kamera oder anderen Teilen der Erfassungseinheit 7 liegenbleibt und nicht mit erfasst wird, was die Messung verfälschen würde, sind alle Teile der Erfassungseinheit 7 mit abweisenden Elementen, beispielsweise spitzen Kegeln oder steilen Dächern, versehen, von denen jegliches Gemüll G abgleitet und auf den Transportmechanismus 3 fällt, wo es erfasst werden kann.

### Anwendungsbeispiel 2

Im zweiten Anwendungsbeispiel wird eine besonders flache Bauweise der erfindungsgemäßen Vorrichtung angewandt, indem nur der Rahmen 1 mit Transportmechanismus 3 unter das Bienenvolk gestellt wird. Das Gemüll G wird hier mittels Förderband 301 nach außen transportiert und dort gelagert oder analysiert.

### Anwendungsbeispiel 3

Dieses dritte Anwendungsbeispiel schließt sich an das zweite Anwendungsbeispiel an, wobei das gesammelte und/oder gelagerte Gemüll G in einer separaten Einheit ausgezählt wird. Dabei erfolgt die Verknüpfung zum jeweiligen Bienenvoll über einen Barcode oder einen Transponder.

### Anwendungsbeispiel 4

In diesem Anwendungsbeispiel wird bei der sensorgesteuerten Behandlungseinheit 11 die Säurekonzentration wird entweder nach dem ausgebrachten Volumen im Verhältnis zum Beutenvolumen oder nach Sensorik bezüglich der gemessene Konzentration ermittelt.

### Bezugszeichen

- 1: Rahmen
- 101: Lastzellen
- 3: Transportmechanismus
- 301: Förderband
- 303: Schrittmotoren
- 305: Umlenkrolle
- 307: Lagereinheiten
- 309: Förderbandspanner
- 5: Analysebereich
- 7: Erfassungseinheit
- 701: Kameraschlitten
- 703: Führungsschiene
- 9: Auswerteeinheit (Elektronik)
- 11: sensorgesteuerte Behandlungseinheit
- 1101: Tank
- 1103: Auslassöffnung
- G: Gemüll
- KI: Künstliche Intelligenz
- M: Maß
- W: Wabenkasten

## Patentansprüche

1. Vorrichtung zur automatisierten Gemüll-Analyse in Bienenbeuten, umfassend
- einen Rahmen (1) zum Unterbauen eines Wabenkastens (W), wobei der Rahmen (1) dazu ausgelegt ist, das aus einem Bienenbeutensystem herausfallende Gemüll (G) aufzufangen,
- einen im Rahmen (1) angeordneten Transportmechanismus (3), der dazu ausgelegt ist, das aufgefangene Gemüll (G) der Bienenbeute aufzunehmen und in einen Analysebereich zu transportieren,
- einen außerhalb des Rahmens (1) für den Transportmechanismus (3) angeordneten Analysebereich (5),
- eine über dem Analysebereich (5) vorgesehenen Erfassungseinheit (7) und
- eine elektronische Auswerteeinheit (9) zur Aufnahme, Aufbereitung und Auswertung der von der Erfassungseinheit (7) aufgenommenen Daten.

2. Vorrichtung nach Anspruch 1, wobei der Transportmechanismus (3) ein Förderband (301) aufweist, das den Bodenbereich des Rahmens (1) vollständig abdeckt und an einer Seite desselben um ein Maß (M) aus diesem herausreicht, so dass der Analysebereich (5) gebildet wird.

3. Vorrichtung nach Anspruch 1 oder 2, wobei die Erfassungseinheit (7) einen optischen Scanner umfasst, der zur Erfassung des Gemülls (G) ausgelegt ist.

4. Vorrichtung nach einem der Ansprüche 1 bis 3, wobei die elektronische Auswerteeinheit (9) ein Steuermodul für den Transportmechanismus (3), ein Speichermodul für die erfassten Daten und eine Kommunikationsschnittstelle zu externen Endgeräten aufweist.

5. Vorrichtung nach einem der Ansprüche 1 bis 4, wobei elektronische Auswerteeinheit (9) auf Künstlicher Intelligenz (KI) beruht.

6. Vorrichtung nach einem der Ansprüche 1 bis 5, ferner umfassend eine sensorgesteuerte Behandlungseinheit (11) zur Behandlung des in dem Wabenkasten (W) beheimateten Bienenvolkes.

7. Vorrichtung nach Anspruch 6, wobei die Behandlungseinheit (11) aufweist
- ein Gehäuse mit mindestens einer Auslassöffnung (1103),
- einen in dem Gehäuse angeordneten Verdampferraum mit einer beheizten und fliesbelegten Verdampferfläche,
- eine Aufgabeeinheit für ein flüssiges Behandlungsmittel auf die beheizte und fliesbelegte Verdampferfläche, welche in fluiddynamischer Verbindung mit einem Tank (1101) steht,
- eine Gebläseeinheit zum Führen von Luft über die beheizte und fliesbelegte Verdampferfläche hin zur Auslassöffnung (1103),
- zumindest ein im Brutraum innerhalb des Wabenkastens (W) angeordneter Sensor, der mit der Elektronik der Behandlungseinheit (11) verbunden ist.

8. Verfahren zur automatisierten Gemüll-Analyse in Bienenbeuten unter Verwendung der Vorrichtung nach einem der Ansprüche 1 bis 7,, umfassend die Schritte
a) Sammeln des Gemülls (G) innerhalb eines Rahmens (1) auf einem Transportmechanismus (3) für einen vorgebbaren Zeitraum,
b) Transportieren des in Schritt a) gesammelten Gemülls (G) in einen Analysebereich (5),
c) Erfassen des Gemülls (G) im Analysebereich (5) mittels einer Erfassungseinheit (7) und Übergeben der erfassten Daten an eine elektronische Auswerteeinheit (9),
d) Auswerten der erfassten Daten in der elektronischen Auswerteeinheit (9) und Ausgeben von Ergebnissen an einen Empfänger.

9. Verfahren nach Anspruch 8, wobei das Erfassen in Schritt c) mittels bildgebender Einheiten erfolgt.

10. Verfahren nach Anspruch 8 oder 9, wobei das Auswerten in Schritt d) mittels Künstlicher Intelligenz (KI) erfolgt und ein qualitatives und quantitatives Ergebnis eines möglichen Befalls des in dem Wabenkasten (W) beheimateten Bienenvolkes an den Empfänger ausgegeben wird.

11. Verfahren nach einem der Ansprüche 8 bis 10, ferner umfassend die Schritte
e) Behandeln des in dem Wabenkasten (W) beheimateten Bienenvolkes gemäß des ermittelten Befalls,
wobei das Behandeln manuell gestartet und anschließend von einer sensorgesteuerten Behandlungseinheit (11) automatisch durchgeführt wird,
f) Analysieren des Befallsgrades in vorgebbaren Zeitintervallen und Korrelieren mit der Behandlungsdauer,
wobei auf der Grundlage des Ergebnisses des Korrelierens die Behandlung angepasst wird.

## Claims

1. Device for automated debris analysis in beehives, comprising
- a frame (1) for supporting a honeycomb box (W), wherein the frame (1) is designed to collect debris (G) falling out of a beehive system,
- a transport mechanism (3) arranged in the frame (1), which is designed to pick up the collected debris (G) from the beehive and transport it to an analysis area,
- an analysis area (5) arranged outside the frame (1) for the transport mechanism (3),
- a detection unit (7) provided above the analysis area (5), and
- an electronic evaluation unit (9) for recording, processing and evaluating the data recorded by the detection unit (7).

2. Device according to claim 1, wherein the transport mechanism (3) has a conveyor belt (301) that completely covers the bottom area of the frame (1) and extends beyond it on one side by a distance (M) such that the analysis area (5) is formed.

3. Device according to claim 1 or 2, wherein the detection unit (7) comprises an optical scanner designed to detect the waste (G).

4. Device according to one of claims 1 to 3, wherein the electronic evaluation unit (9) comprises a control module for the transport mechanism (3), a memory module for the recorded data and a communication interface to external terminal devices.

5. Device according to one of claims 1 to 4, wherein the electronic evaluation unit (9) is based on artificial intelligence (AI).

6. Device according to one of claims 1 to 5, further comprising a sensor-controlled treatment unit (11) for treating the bee colony housed in the honeycomb box (W).

7. Device according to claim 6, wherein the treatment unit (11) comprises
- a housing with at least one outlet opening (1103),
- an evaporator chamber arranged in the housing with a heated and fleece-covered evaporator surface,
- a feed unit for a liquid treatment agent onto the heated and fleece-covered evaporator surface, which is in fluid dynamic connection with a tank (1101),
- a blower unit for directing air over the heated and flow-covered evaporator surface to the outlet opening (1103),
- at least one sensor arranged in the brood chamber inside the honeycomb box (W), which is connected to the electronics of the treatment unit (11).

8. Method for automated debris analysis in beehives using the device according to one of claims 1 to 7, comprising the steps of
a) collecting the debris (G) within a frame (1) on a transport mechanism (3) for a predeterminable period of time,
b) transporting the debris (G) collected in step a) to an analysis area (5),
c) detecting the debris (G) in the analysis area (5) by means of a detection unit (7) and transferring the detected data to an electronic evaluation unit (9),
d) evaluating the detected data in the electronic evaluation unit (9) and outputting results to a receiver.

9. Method according to claim 8, wherein the detection in step c) is performed by means of imaging units.

10. Method according to claim 8 or 9, wherein the evaluation in step d) is performed by means of artificial intelligence (AI) and a qualitative and quantitative result of a possible infestation of the bee colony residing in the honeycomb box (W) is output to the receiver.

11. Method according to one of claims 8 to 10, further comprising the steps of
e) treating the bee colony housed in the honeycomb box (W) according to the determined infestation,
wherein the treatment is started manually and then carried out automatically by a sensor-controlled treatment unit (11),
f) analysing the degree of infestation at predeterminable time intervals and correlating it with the duration of treatment,
whereby the treatment is adjusted on the basis of the result of the correlation.

## Revendications

1. Dispositif d'analyse automatisée de la gelée dans des ruches, comprenant
- un cadre (1) pour le montage d'une boîte à rayons (W), le cadre (1) étant conçu pour recueillir la gelée (G) tombant d'un système de ruche,
- un mécanisme de transport (3) agencé dans le cadre (1), qui est conçu pour recevoir la gelée (G) recueillie de la ruche et la transporter dans une zone d'analyse,
- une zone d'analyse (5) agencée à l'extérieur du cadre (1) pour le mécanisme de transport (3),
- une unité d'acquisition (7) prévue au-dessus de la zone d'analyse (5) et
- une unité d'évaluation électronique (9) pour enregistrer, traiter et évaluer les données enregistrées par l'unité d'acquisition (7).

2. Dispositif selon la revendication 1, dans lequel le mécanisme de transport (3) présente une bande de convoyage (301) recouvrant entièrement la zone de fond du cadre (1) et dépassant d'un côté de celui-ci d'une dimension (M), de manière à former la zone d'analyse (5).

3. Dispositif selon la revendication 1 ou 2, dans lequel l'unité d'acquisition (7) comprend un scanner optique conçu pour l'acquisition de la gelée (G).

4. Dispositif selon l'une quelconque des revendications 1 à 3, dans lequel l'unité d'évaluation électronique (9) présente un module de commande pour le mécanisme de transport (3), un module de stockage des données acquises et une interface de communication avec des terminaux externes.

5. Dispositif selon l'une quelconque des revendications 1 à 4, dans lequel l'unité d'évaluation électronique (9) est basée sur l'intelligence artificielle (IA).

6. Dispositif selon l'une quelconque des revendications 1 à 5, comprenant en outre une unité de traitement (11) commandée par capteur pour le traitement de la colonie d'abeilles hébergée dans la boîte à rayons (W).

7. Dispositif selon la revendication 6, dans lequel l'unité de traitement (11) présente
- un boîtier avec au moins une ouverture de sortie (1103),
- une chambre d'évaporation agencée dans le boîtier avec une surface d'évaporation chauffée et recouverte d'un écoulement,
- une unité d'alimentation pour un agent de traitement liquide sur la surface d'évaporation chauffée et recouverte d'un écoulement, qui est en communication fluidodynamique avec un réservoir (1101),
- une unité de soufflage pour guider de l'air sur la surface d'évaporation chauffée et recouverte d'un écoulement vers l'ouverture de sortie (1103),
- au moins un capteur agencé dans l'espace d'incubation à l'intérieur de la boîte à rayons (W), qui est relié à l'électronique de l'unité de traitement (11).

8. Procédé d'analyse automatisée de la gelée dans des ruches en utilisant le dispositif selon l'une quelconque des revendications 1 à 7, comprenant les étapes suivantes:
a) la collecte de la gelée (G) à l'intérieur d'un cadre (1) sur un mécanisme de transport (3) pendant une période de temps prédéterminable,
b) le transport de la gelée (G) collectée à l'étape a) dans une zone d'analyse (5),
c) l'acquisition de la gelée (G) dans la zone d'analyse (5) au moyen d'une unité d'acquisition (7) et la transmission des données acquises à une unité d'évaluation électronique (9),
d) l'évaluation des données acquises dans l'unité d'évaluation électronique (9) et la délivrance de résultats à un récepteur.

9. Procédé selon la revendication 8, dans lequel l'acquisition à l'étape c) est effectuée au moyen d'unités d'imagerie.

10. Procédé selon la revendication 8 ou 9, dans lequel l'évaluation à l'étape d) est effectuée au moyen d'intelligence artificielle (IA) et un résultat qualitatif et quantitatif d'une éventuelle infestation de la colonie d'abeilles hébergée dans la boîte à rayons (W) est délivré au récepteur.

11. Procédé selon l'une quelconque des revendications 8 à 10, comprenant en outre les étapes suivantes :
e) le traitement de la colonie d'abeilles logée dans la boîte à rayons (W) conformément à l'infestation déterminée,
le traitement étant lancé manuellement et étant ensuite exécuté automatiquement par une unité de traitement (11) commandée par capteur,
f) l'analyse du degré d'infestation à des intervalles de temps prédéterminables et la corrélation avec la durée de traitement,
le traitement étant adapté sur la base du résultat de la corrélation.
